# FASCICULE DE BREVET EUROPEEN

(11) **EP 3 967 170 B1**
(45) Date de publication et mention de la délivrance du brevet: **11.09.2024**
(21) Numéro de dépôt: 21195544.8
(22) Date de dépôt: 08.09.2021
(51) Int. Cl.: A43B 1/00, A43B 13/38, A43B 13/39, A43B 23/02, A43B 23/04

(54) **ARTICLE CHAUSSANT**
SCHUHARTIKEL
ARTICLE OF FOOTWEAR

(30) Priorité: 10.09.2020 FR 2009151
(43) Date de publication de la demande: 16.03.2022
(73) Titulaire: Salomon S.A.S., 74370 Metz-Tessy (FR)
(72) Inventeur: MOUZIN, Olivier, 74210 TALLOIRES-MONTMIN (FR); RICARD, Marielle, 74600 ANNECY (FR)
(74) Mandataire: Lapierre, Stéphane

(56) Documents cités:
- EP-A1- 0 571 710
- WO-A1-2019/175766
- DE-A1- 2 702 112
- FR-A1- 2 772 563
- FR-A1- 3 095 926
- GB-A- 2 158 692
- GB-A- 2 289 613
- US-A- 4 308 671
- US-A1- 2006 117 608
- MARJORIE J WALL ET AL: "A Study of the Spectral Distributions of Sun-Sky and Xenon-Arc Radiation in Relation to the Degradation of Some Textile Yarns: . Part I : Yarn Degradation", INTERNET CITATION, 1 January 1971 (1971-01-01), pages 32 - 38, XP002715307, ISSN: 0040-5175, Retrieved from the Internet <URL:http://trj.sagepub.com/content/41/1/32.full.pdf> [retrieved on 20131023]

## Description

La présente invention concerne un article chaussant tel qu'une chaussure de marche ou de sport.

De manière classique, une chaussure est construite à partir d'une multitude de pièces constituées de différents matériaux. Ces pièces sont généralement assemblées entre elles de sorte à former un ensemble unitaire, difficilement démontable, à l'exception des lacets et de la semelle de propreté.

Un des enjeux des développements actuels est de concevoir des produits plus respectueux de l'environnement. Pour cela, une première piste vise à pouvoir recycler les produits usagés. Une autre piste consiste à pouvoir réparer les parties endommagées d'un produit.

Les constructions classiques de chaussure ne permettent pas, ou difficilement, de répondre à ces deux pistes écologiques.

Le brevet EP 3 081 109 décrit une construction de chaussure permettant de faciliter le recyclage du produit. Pour cela, la chaussure est réalisée à partir d'une même base de matériau thermoplastique. En utilisant le même type de matériau pour la tige et la semelle, il est alors beaucoup plus facile de recycler la chaussure. Il suffit alors de broyer la chaussure en entier pour récupérer des broyats réutilisables afin de fabriquer d'autres produits. Cependant, cette solution ne permet pas l'utilisation de matériau spécifiquement adapté à chaque partie de la chaussure. En effet, la tige et la semelle sont des parties de la chaussure qui ne répondent pas au même besoin. Aussi, utiliser un même type de matériau pour l'ensemble de la chaussure implique de faire un compromis sur les fonctionnalités résultant des caractéristiques du matériau commun utilisé. Souvent la résistance est privilégiée au détriment du confort. De plus, cette construction ne permet pas d'envisager la réparation des parties endommagées du produit.

Le brevet EP 2 861 793 décrit un article comprenant un textile connecté à un autre composant par un moyen de liaison dégradable lorsqu'il est exposé à un rayonnement électromagnétique dans la plage des fréquences radio ou micro-ondes. Les composants de cet article sont ainsi facilement séparables en vue d'être recyclés ou pour être réutilisés dans un autre produit. Le document décrit principalement une application pour des vêtements mais suggère une multitude d'applications dans d'autres domaines, dont celui de la chaussure, sans plus de précisions. La transposition de ce concept à une chaussure est envisageable mais loin d'être simple lorsqu'on considère les contraintes liées à ce domaine.

Le brevet US 2006/117608 A1 décrit un article chaussant comprenant une tige comprenant un élément couvrant au moins une partie du pied, l'élément couvrant étant raccordé à un élément solidaire du semelage par un moyen de liaison.

Le but de l'invention est de proposer une construction d'un article chaussant dont certains composants sont dissociables dans un objectif de recyclage et/ou de réparation. Cette construction est compatible avec un procédé de fabrication de chaussure standard, sans nécessité de machines spécifiques.

Un but est notamment de proposer un article chaussant dont certains composants sont facilement séparables.

Un but est notamment de proposer un article chaussant comprenant des composants facilement séparables, ces composants étant constitués d'un matériau adapté à sa fonction, liée à leur localisation.

Un autre but est de proposer une construction particulière de chaussure permettant d'assurer une protection du pied sans être au détriment du confort.

L'invention concerne un article chaussant tel que spécifié dans la revendication indépendante 1 annexée et un procédé de recyclage et/ou de réparation d'un article chaussant tel que spécifié dans la revendication indépendante 13 annexée. Des modes de réalisation préférés de l'invention sont décrits dans les revendications dépendantes.

Cette construction spécifique de chaussure permet de positionner une paroi remontante du semelage, réalisée avec le même matériau que celui utilisé pour le semelage, sur au moins une partie de la périphérie du semelage. Ainsi, cela permet de placer un renfort localement et donc de protéger ou maintenir le pied, de manière adaptée. De plus, en choisissant un matériau relativement rigide pour cette paroi, cela permet de faciliter la mise en forme de la tige, d'assurer son galbage. Enfin, on peut utiliser un matériau plus confortable pour la partie supérieure de la tige, notamment sur le plan thermique et sur le plan de la respirabilité.

Selon des aspects avantageux mais non obligatoires de l'invention, un tel article chaussant peut incorporer une ou plusieurs des caractéristiques suivantes, prises dans toute combinaison techniquement admissible : -
- la paroi de liaison constitue au moins une partie de la partie frontale de la tige sur une hauteur d'au moins dix millimètres, distance verticale mesurée à partir de la surface supérieure d'accueil du semelage externe,
- la paroi de liaison couvre au moins une portion avant de la tige incorporant une zone frontale, une zone latérale avant et une zone médiale avant de la tige,
- la paroi de liaison constitue au moins une partie de la partie arrière de la tige sur une hauteur d'au moins quinze millimètres, distance verticale mesurée à partir de la surface supérieure d'accueil du semelage externe,
- la paroi de liaison couvre au moins une portion arrière de la tige incorporant une zone arrière, une zone latérale arrière et une zone médiale arrière de la tige,
- la paroi de liaison forme une bande continue s'étendant sur tout le périmètre du bord supérieur du semelage,
- le moyen de liaison comprend au moins un fil ou filament apte à réagir et à se dégrader lorsqu'il est exposé à au moins une onde électromagnétique et/ou à une température supérieure à 80°C et/ou à la présence de molécules d'eau,
- le premier type de matériau est un des matériaux parmi : un thermoplastique, un élastomère, un Ethylene-Vinyl Acetate (EVA), un matériau naturel,
- l'élément couvrant est réalisé dans un deuxième type de matériau, différent du premier type de matériau,
- le deuxième type de matériau est un des matériaux parmi : un PolyEster (PES, PET), un PolyAmide (PA), un matériau naturel,
- la paroi de liaison et l'élément couvrant forment un textile monobloc unitaire,
- la paroi de liaison et l'élément couvrant forme un manchon textile,
- le manchon textile est réalisé lors d'une seule opération de fabrication telle que du tricotage, du tissage ou de la broderie, le moyen de liaison étant alors réalisé par un fil dégradable localement implanté dans le textile.

D'autres caractéristiques et avantages de l'invention seront mieux compris à l'aide de la description qui va suivre, en regard des dessins annexés illustrant, selon des formes de réalisation non limitatives, comment l'invention peut être réalisée, et dans lequel :
[Fig. 1] La figure 1 est une vue de dessus en perspective avant d'une chaussure pour pied droit selon un premier mode de réalisation de l'invention.
[Fig. 2] La figure 2 est une vue de côté de la chaussure représentée à la figure 1.
[Fig. 3] La figure 3 est une vue éclatée de dessus en perspective de la chaussure représentée à la figure 1.
[Fig. 4] La figure 4 est une vue éclatée de côté de la chaussure représentée à la figure 1.
[Fig. 5] La figure 5 est une vue en coupe schématique selon V-V de la figure 2.
[Fig. 6] La figure 6 est une vue en coupe schématique analogue à la figure 5 d'un deuxième mode de réalisation de l'invention.
[Fig. 7] La figure 7 est une vue en coupe schématique analogue à la figure 5 d'un troisième mode de réalisation de l'invention.
[Fig. 8] La figure 8 est une vue en coupe schématique analogue à la figure 5 d'un quatrième mode de réalisation de l'invention.
[Fig. 9] La figure 9 est une vue en coupe schématique analogue à la figure 5 d'un cinquième mode de réalisation de l'invention.
[Fig. 10] La figure 10 est une vue en coupe schématique analogue à la figure 5 d'un sixième mode de réalisation de l'invention.
[Fig. 11] La figure 11 est une vue en coupe schématique analogue à la figure 5 d'un septième mode de réalisation de l'invention.
[Fig. 12] La figure 12 est une vue en coupe schématique analogue à la figure 5 d'un huitième mode de réalisation de l'invention.
[Fig. 13] La figure 13 est une vue en coupe schématique analogue à la figure 5 d'un neuvième mode de réalisation de l'invention.
[Fig. 14] La figure 14 est une vue en coupe schématique analogue à la figure 5 d'un dixième mode de réalisation de l'invention.
[Fig. 15] La figure 15 est une vue en coupe schématique analogue à la figure 5 d'un onzième mode de réalisation de l'invention.
[Fig. 16] La figure 16 est une vue de dessus en perspective avant d'une chaussure pour pied droit selon un douzième mode de réalisation de l'invention.

Dans la suite de la description, il sera fait usage de termes tels que « vertical », « supérieur », « inférieur », « haut », « bas », « transversal », « latéral », « médial », « droite », « gauche », « horizontal », « antérieur », « postérieur », « devant », « derrière », « avant », « arrière ». Ces termes doivent être interprétés en fait de façon relative en relation avec la position que la chaussure occupe sur le pied d'un utilisateur en posture normale, et la direction d'avancement normale d'un utilisateur. On considère une posture normale, une configuration pour laquelle la semelle est posée à plat sur un sol horizontal.

Les termes « latéral » et « médial », de manière conventionnelle, s'entendent comme tournés respectivement vers l'extérieur et vers l'intérieur. Ainsi, le côté médial d'un pied ou d'une chaussure est tourné vers le côté médial de l'autre pied ou de l'autre chaussure de l'utilisateur.

Le terme « longitudinal » fait référence à une direction talon-orteils correspondant à l'axe X alors que le terme « transversal », fait référence à une direction latérale-médiale (pour un pied droit) correspondant à l'axe Y et donc sensiblement perpendiculaire à la direction longitudinale. La direction verticale ou bas/haut correspond à l'axe Z.

Dans la description, une « chaussure » est définie par un « semelage » et une « tige ». Le « semelage » est la partie inférieure de la chaussure comprise entre le pied et le sol. C'est le « dessous » de la chaussure. Le semelage est positionné en vis-à-vis de la plante du pied. La « tige » est la partie supérieure de la chaussure enveloppant le pied et éventuellement une partie de la cheville, à l'exception du « dessous » du pied. C'est le « dessus » de la chaussure. La tige est solidarisée avec le bord périphérique du semelage. A noter que certains éléments de la chaussure peuvent former à la fois une partie du semelage et une partie de la tige.

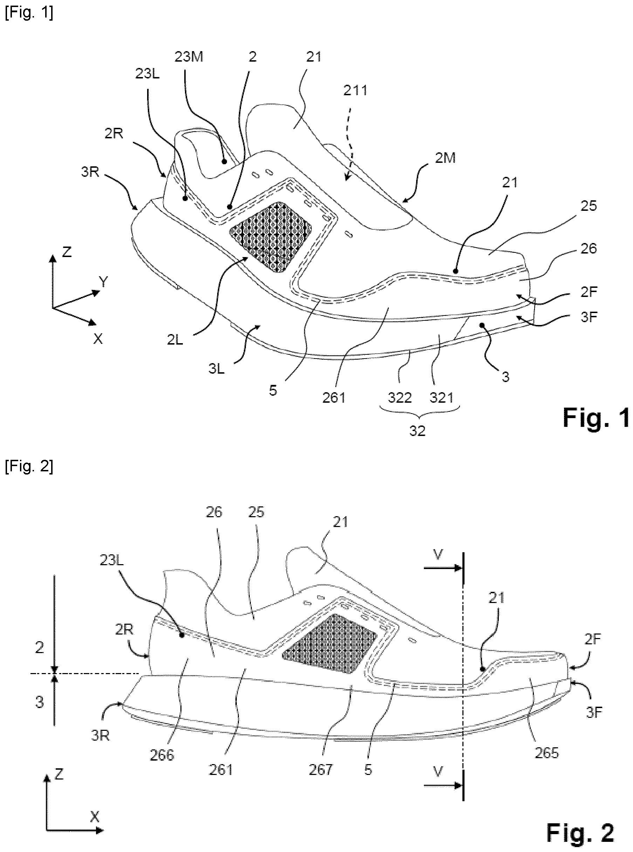

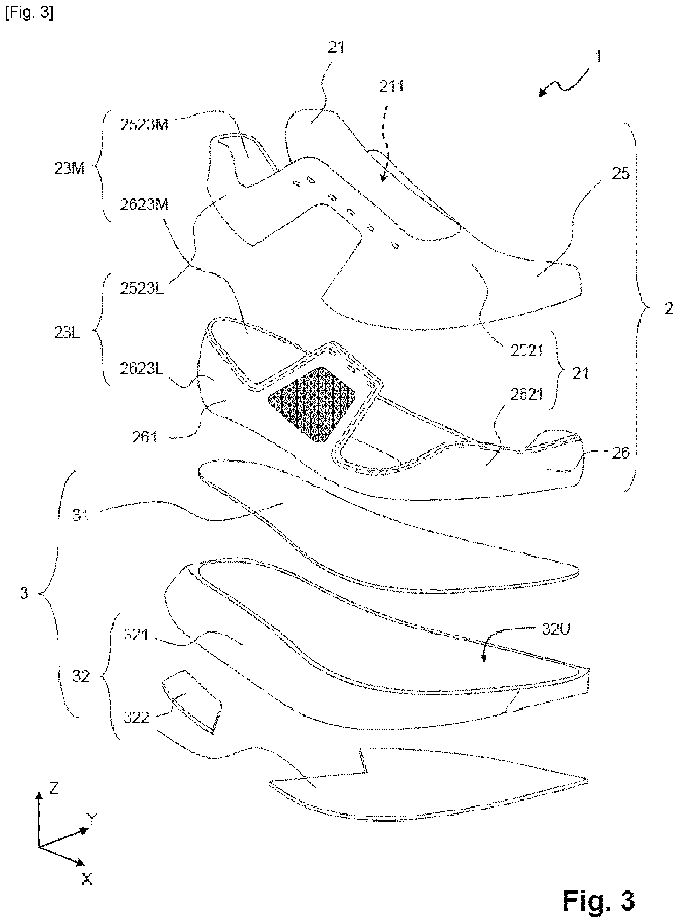

Les figures 1 à 5 illustrent la construction d'un article chaussant selon un premier mode de réalisation de l'invention dans une chaussure de sport 1. La chaussure de sport 1 pour pied droit représentée est une chaussure de course à pied, mais pourrait être un tout autre type de chaussure de sport. Cette chaussure 1 est représentée en perspective, vue de dessus dans la figure 1. Elle comporte une tige 2, qui surmonte un semelage 3. Dans cet exemple, les lacets ne sont pas représentés.

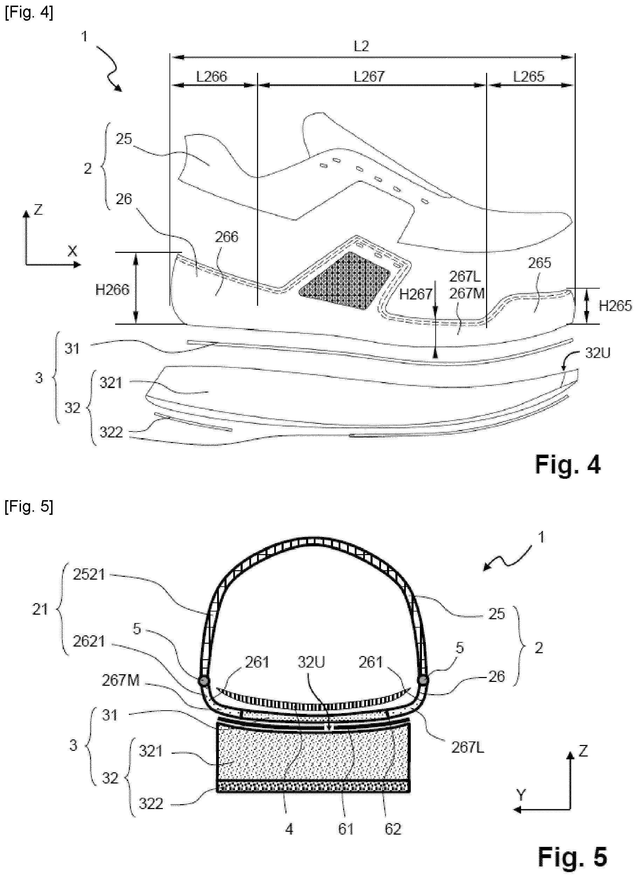

Dans cet exemple, le semelage 3 comprend une superposition de couches entre le sol et le dessous du pied, comme illustrée à la figure 5. La première couche est une première de montage 31. Cette première couche 31 est généralement fixée aux bords périphériques inférieurs de la tige 2. C'est une couche optionnelle. Dans certains modes de réalisation, cette couche peut être omise. La couche suivante, située dessous la première de montage 31, forme un semelage externe 32. Ce semelage externe 32 est généralement fixé sur la première de montage 31 de toute façon connue en soi, par exemple, grâce à une couche de colle 61. Ce semelage externe 32 est destiné à venir au contact du sol. Ici, le semelage externe 32 comprend une couche intercalaire ou couche d'amortissement 321 et une couche d'usure 322. La couche intercalaire 321 succède à la première de montage. La couche d'usure 322 est généralement fixée à la couche intercalaire 321, en dessous de celle-ci, de toute façon connue en soi, par exemple, par collage ou surmoulage. Cette couche d'usure est destinée à être systématiquement en contact avec le sol. Elle assure ainsi l'accroche ou « grip » de la chaussure. La couche d'usure est une couche optionnelle qui peut être omise dans certains modes de réalisations. Ce peut être notamment le cas si la couche intercalaire présente une bonne résistance à l'usure. Le semelage externe 32 présente une surface supérieure d'accueil 32U destinée à faire face à la plante du pied.

Le semelage 3 s'étend en longueur depuis une extrémité arrière 3R jusqu'à une extrémité avant 3F, en largeur entre un côté latéral 3L et un côté médial 3M.

Dans certains modes de réalisation, une première de propreté 4 est insérée, de manière amovible, à l'intérieur de la chaussure. C'est une couche optionnelle qui est destinée à s'intercaler entre le pied et la première de montage 31.

Dans cet exemple, la tige 2 comprend plusieurs composants. L'empeigne ou claque 21 constitue un premier composant. Elle couvre les parties supérieure, frontale, latérale et médiale de l'avant-pied. Dans cet exemple, la claque 21 comprend une ouverture supérieure 211 obturée par une languette 22, optionnelle. La languette 22 constitue un deuxième composant de la tige. Elle est solidarisée à la claque 21. Les bords latéral et médial de l'ouverture supérieure portent des passants destinés à recevoir une portion d'un moyen de serrage non représenté. Typiquement, le moyen de serrage peut être un lacet. Alternativement, ce peut être une fermeture à glissière, des bandes adhésives VELCRO^{®}... Le système de serrage permet de rapprocher les bords de l'ouverture supérieure 211 assurant l'enserrement du coude-pied par la claque. Ce serrage contribue fortement au bon maintien du pied. Des quartiers latéral 23L et médial 23M constituent un troisième composant de la tige. Elles forment l'emboitage du talon et couvrent les parties arrière, latérale et médiale de l'arrière-pied. Les quartiers 23L, 23M prolongent la claque 21 à l'arrière de celle-ci afin de former une enveloppe couvrant le dessus et tous les côtés du pied. Les bords supérieurs des quartiers 23L, 23M et de la languette 22 délimitent une ouverture pour l'introduction du pied dans la chaussure. La tige 2 peut être renforcée localement pour assurer une tenue de la tige et/ou protéger le pied. Par exemple, un « bout » peut couvrir l'extrémité avant de la tige. De même, un « contrefort » peut renforcer la partie de la tige 2 entourant le talon.

Selon un autre mode de réalisation, la tige 2 peut couvrir qu'une partie supérieure réduite du pied. Par exemple, dans le cas des tongs, la claque est évidée.

Les composants de la tige 2 peuvent être des pièces distinctes. Alternativement, certains composants ou tous les composants forment une pièce unitaire en étant, par exemple, réalisée avec un même procédé (tricotage, tissage...). Certains composants peuvent également comprendre plusieurs parties assemblées entre elles de toute façon connue en soi, par exemple, par couture ou collage. Selon certains modes de réalisation, certains composants de la tige 2 peuvent se prolonger sous le pied pour former une partie du semelage 3 ou inversement, certains composants du semelage 3 peuvent se prolonger vers le haut, depuis la périphérie du semelage, pour former une partie de la tige 2.

La tige 2 s'étend en longueur depuis une extrémité arrière 2R jusqu'à une extrémité avant 2F, définissant ainsi une longueur de semelle L2, et en largeur entre un côté latéral 2L et un côté médial 2M.

Par la suite, on désignera par « élément couvrant », une partie de la tige 2 couvrant au moins une partie supérieure et/ou au moins une partie latérale/frontale/avant/arrière du pied.

Le semelage 3 constitue l'interface entre le pied et le sol. Il doit donc posséder un ensemble de propriétés pour optimiser les phénomènes d'adhérence, de résistance à la flexion, d'amortissement et de résistance à l'abrasion. La couche intercalaire ou couche d'amortissement 321 est conçue dans un matériau présentant de bonnes propriétés d'amortissement et/ou d'isolation. La couche d'usure 322 est conçue dans un matériau présentant de bonnes propriétés d'adhérence et de résistance à l'abrasion. La première de montage 31 est conçue dans un matériau faiblement déformable, ce qui permet de maintenir la géométrie de la tige sur la forme lors de l'assemblage de la tige.

Les composants du semelage 3 peuvent être réalisés par impression 3D, par injection, par thermoformage, par tricotage, par tissage, par projection, par broderie, par compression, par aiguilletage, par bio fabrication.

Selon l'invention, les composants du semelage 31, 321, 322 sont majoritairement réalisés avec un même premier type de matériau. Ce peut être un des matériaux parmi : un thermoplastique, un élastomère, un Ethylene-Vinyl Acetate (EVA), un matériau naturel. Parmi les matériaux naturels, on peut utiliser un des matériaux suivants : un liège, un cuir, un caoutchouc, une algue. On peut également utiliser des matériaux dits « bio-fabriqué », matériau réalisé à partir d'organismes biologiques (mycélium, bactérie... ). Ce matériau peut également intégrer une proportion de matériau recyclé. Les moyens d'assemblage des composants du semelage entre eux, comme une colle ou une couture, ne sont pas nécessairement constitués du même premier type de matériau.

Selon l'invention, la tige 2 comprend deux parties, une partie haute 25 et une partie basse 26. La partie haute 25 correspond à l'élément couvrant de la chaussure. Dans cet exemple, elle inclut la languette. Elle peut être composée d'une seule pièce ou, alternativement, elle peut résulter d'un assemblage de plusieurs pièces, que ce soit pour la claque 21 ou pour les quartiers 23. La partie basse 26 est composée d'une paroi de liaison 261 sur laquelle est fixée l'élément couvrant 25. La paroi de liaison 261 forme une extension d'un bord du semelage 3, s'étendant vers le haut, de sorte que le bord supérieur de la paroi de liaison 261 est éloigné de la surface supérieure d'accueil 32U du semelage externe 32 (selon une direction Z). La paroi de liaison 261 peut constituer le prolongement supérieur du semelage 3 sur tout son pourtour. Alternativement, la paroi de liaison 261 peut constituer le prolongement supérieur du semelage 3 uniquement localement, à partir d'un secteur du pourtour du semelage 3.

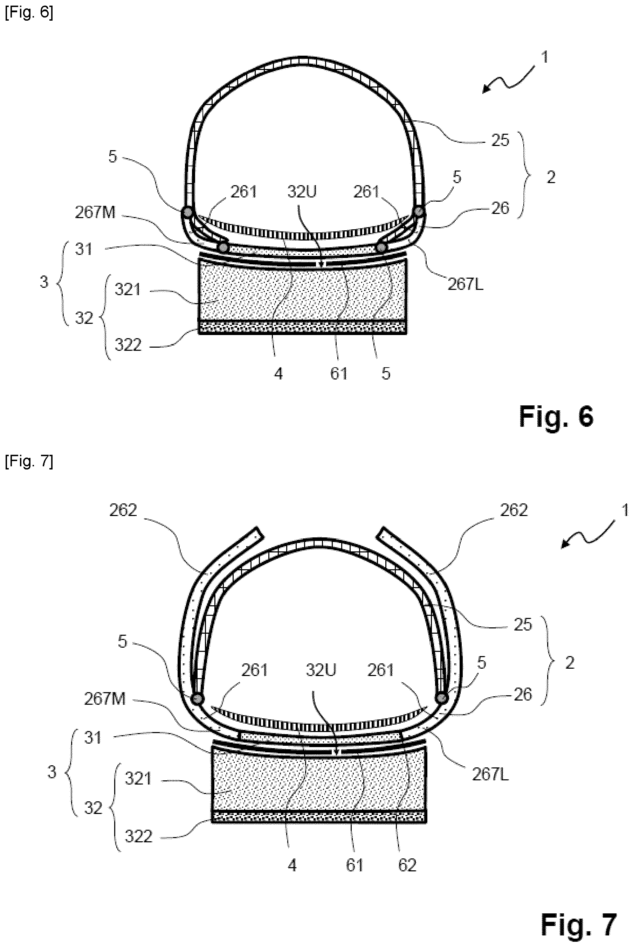

La paroi de liaison 261 peut être un composant distinct solidaire du semelage 3. La paroi de liaison 261 est alors fixée sur le semelage 3 de toute façon connue en soi, par exemple, par couture ou collage (figures 5, 6). Alternativement, la paroi de liaison 261 est réalisée à partir d'un élément du semelage, par exemple, la couche d'amortissement 321 ou la première de montage 31 (figures 7 à 15). Dans ce cas, la paroi de liaison 261 et l'élément du semelage forment une pièce monobloc unitaire 3126, 321a, 2516. La paroi de liaison 261 constitue alors une extension supérieure de l'élément du semelage 31, 321.

Selon l'invention, la paroi de liaison 261 est réalisée avec le même premier type de matériau que celui utilisé majoritairement pour les composants du semelage 31, 321, 322. Selon un mode de réalisation, le matériau de la paroi de liaison 261 présente une rigidité supérieure à celle du matériau utilisé pour la partie haute 25 de la tige 2. Cela permet de faciliter la mise en forme de la tige 2, son galbage. Par ailleurs, cela permet de renforcer la structure de la tige et de protéger le pied des chocs.

Le matériau utilisé pour la paroi de liaison peut donc être un des matériaux parmi : un thermoplastique, un élastomère, un Ethylene-Vinyl Acetate (EVA), un matériau naturel. Parmi les matériaux naturels, on peut utiliser un des matériaux suivants : un liège, un cuir, un caoutchouc, une algue. On peut également utiliser des matériaux dits « bio-fabriqué », matériau réalisé à partir d'organismes biologiques (mycélium, bactérie...). Ce matériau peut également intégrer une proportion de matériau recyclé.

Selon un mode de réalisation, la paroi de liaison 261 couvre au moins une portion avant 265 de la tige incorporant une zone frontale, une zone latérale avant et une zone médiale avant de la tige. Ainsi, cette portion avant 265 forme un renfort correspondant au « bout dur » de la tige, protégeant les orteils des chocs. Pour obtenir une bonne protection, la paroi de liaison 261 présente une hauteur H265 d'au moins dix millimètres, de préférence d'au moins quinze millimètres, distance verticale, selon l'axe Y, mesurée à partir de la surface supérieure d'accueil 32U du semelage externe 32, au niveau de l'extrémité avant 2F de la tige. Selon un exemple, cette portion avant 265 s'étend d'une longueur L265 depuis l'extrémité avant 2F de la tige pour couvrir une partie latérale et médiale de la tige sur au moins 15% de la longueur L2 de la tige. Les parties latérale et médiale de la paroi de liaison 261 peuvent présenter une hauteur inférieure à la hauteur H265 dans la zone frontale.

Selon un mode de réalisation, la paroi de liaison 261 couvre au moins une portion arrière 266 de la tige incorporant une zone arrière, une zone latérale arrière et une zone médiale arrière de la tige. Ainsi, cette portion arrière 266 forme un renfort correspondant au « contrefort » de la tige, assurant le maintien du talon dans l'emboitage et protégeant le talon des chocs. Pour obtenir un bon maintien et une bonne protection, la paroi de liaison 261 présente une hauteur H266 d'au moins quinze millimètres, de préférence d'au moins vingt millimètres, distance verticale, selon l'axe Y, mesurée à partir de la surface supérieure d'accueil 32U du semelage externe 32, au niveau de l'extrémité arrière 2R de la tige. Selon un exemple, cette portion arrière 266 s'étend d'une longueur L266 depuis l'extrémité arrière 2R de la tige pour couvrir une partie latérale et médiale de la tige sur au moins 15% de la longueur L2 de la tige. Les parties latérale et médiale de la paroi de liaison 261 peuvent présenter une hauteur inférieure à la hauteur H266 dans la zone arrière.

Selon un mode de réalisation, la paroi de liaison 261 couvre au moins une portion latérale 267L et/ou médiale 267M de la tige incorporant une zone latérale et/ou une zone médiale de la tige. Ainsi, cette portion latérale 267L et/ou médiale 267M forme un renfort correspondant aux « ailettes » de la tige, maintenant et préservant le volume de la cambrure, assurant également le maintien latéral du pied. Pour obtenir un bon maintien, la paroi de liaison 261 présente une hauteur H267 d'au moins cinq millimètres, de préférence d'au moins dix millimètres, distance verticale, selon l'axe Y, mesurée à partir de la surface supérieure d'accueil 32U du semelage externe 32, au niveau d'un côté latéral 2L et/ou d'un côté médial 2M de la tige. Selon un exemple, cette portion latérale 267L et/ou médiale 267M s'étend d'une longueur L267 de la tige pour couvrir une partie latérale et /ou médiale de la tige sur au moins 70% de la longueur L2 de la tige.

Les distances H265, H266, H267 sont représentées à la figure 4 à l'épaisseur de la première de montage près.

Selon un mode de réalisation, la paroi de liaison 261 forme une bande continue s'étendant surtout le périmètre du bord supérieur du semelage. Cette bande continue peut-être une pièce monobloc unitaire ou un assemblage de plusieurs pièces, distinctes entre elles, de sorte à former une bande continue. Cette construction en collerette périphérique améliore la tenue de la paroi de liaison et, en conséquence, le renfort de la chaussure et la protection du pied. De plus, cela facilite la mise en forme de la tige, son galbage. Selon un mode de réalisation, cette bande continue peut-être renforcée localement par des couches superposées à la bande périphérique. Par exemple, à l'extrémité avant et/ou à l'extrémité arrière de la tige, une couche de renfort peut se superposer, en épaisseur, à la paroi de liaison 261.

Selon un mode de réalisation, les quartiers latéral 23L et médial 23M sont entièrement réalisés avec le premier type de matériau. Les quartiers 23 ne sont donc pas composés de deux parties distinctes comme décrit précédemment, à savoir, une partie haute 2523 et une partie basse 2623. Dans cet exemple, l'élément couvrant 25 recouvre alors uniquement la partie supérieure 2521 de l'avant-pied, au niveau de l'empeigne ou claque 21. L'élément couvrant 25 inclut également la languette 21. La paroi de liaison 261, 2621 est également localisée au niveau de l'avant-pied, au niveau de l'empeigne ou claque 21. Ainsi, le moyen de liaison 5 va relier, d'une part, l'élément couvrant 2521 avec la paroi de liaison 2621, au niveau de l'empeigne ou claque 21 et, d'autre part, l'élément couvrant 2521 avec, respectivement, les bords avant des quartiers latéral 23L et médial 23M de la tige 2.

Cette construction est celle du mode de réalisation illustré aux figures 1 à 5.

L'ensemble des parois de liaison 261 forme la partie basse 26 de la tige.

Selon un mode de réalisation, les parois de liaison 261 peuvent se prolonger par des extensions supérieures 262 couvrant une partie extérieure ou intérieure de la partie haute 25 de la tige. Cette construction est illustrée à la figure 7.

Selon un mode de réalisation, la partie basse 26 de la tige comprend une partie inférieure 2621 de la claque 21, une partie inférieure 2623L du quartier latéral 23L et une partie inférieure 2623M du quartier médial 23M.

Pour construire la tige 2, la partie haute 25, ou élément couvrant, est fixée sur la partie basse 26 de manière à compléter l'enveloppe entourant les parties supérieure, frontale, arrière, latérale et médiale du pied.

Dans cet exemple, la partie haute 25 de la tige comprend une partie supérieure 2521 de la claque 21, la languette 22, une partie supérieure 2523L du quartier latéral 23L et une partie supérieure 2523M du quartier médial 23M.

Autrement dit, dans cet exemple, l'empeigne ou claque 21 comprend une partie supérieure 2521 et une partie inférieure 2621, le quartier latéral 23L comprend une partie supérieure 2523L et une partie inférieure 2623L et le quartier médial 23M comprend une partie supérieure 2523M et une partie inférieure 2623M.

Pour que la tige présente une bonne respirabilité, un bon confort thermique et un bon enveloppement du pied, le choix du matériau constitutif de la partie haute s'avère primordial. En général, le premier type de matériau utilisé pour le semelage ne permet pas de répondre aux besoins exprimés ci-dessus. Aussi, en choisissant des matériaux plus adaptés pour réaliser la partie haute 25 de la tige, on va améliorer sensiblement les caractéristiques de la chaussure, notamment son confort (au porter, thermique) et sa respirabilité. On peut, par exemple, choisir une matière élastique qui permettra de mieux s'adapter à la morphologie du pied.

Selon un mode de réalisation, la partie haute 25 de la tige est réalisée avec un deuxième type de matériau, différent du premier type de matériau utilisé pour le semelage. Par exemple, ce deuxième type de matériau est choisi parmi les matériaux suivants : un PolyEster (PES, PET), un PolyAmide (PA), un matériau naturel. Parmi les matériaux naturels, on peut utiliser un des matériaux suivants : un cuir, un lin, un chanvre, une laine. On peut également utiliser des matériaux dits « bio-fabriqué », matériau réalisé à partir d'organismes biologiques (mycélium, bactérie...). Ce matériau peut également intégrer une proportion de matériau recyclé. Les moyens d'assemblage des composants de la tige entre eux, comme une colle ou une couture ne sont pas nécessairement constitués du même type de matériau que celui de la partie haute de la tige.

Pour construire cette partie de la tige, on peut compter sur une grande variété pour ce deuxième type de matériau, ce qui permet d'optimiser les propriétés inhérentes à la tige. Ces matériaux sont faciles à mettre en oeuvre. Ils sont confortables et doux. Leur souplesse permet de mieux s'adapter à la morphologie du pied.

Selon un mode de réalisation avantageux, le deuxième type de matériau, utilisé pour l'élément couvrant 25, est plus souple, élastique et/ou plus respirant que le premier type de matériau, utilisé pour la semelle et la paroi de liaison. Le premier type de matériau présente une rigidité suffisante pour assurer un bon maintien de la tige.

En alternative, pour faciliter le recyclage, l'élément couvrant 25 (partie haute) de la tige est réalisé avec le même type de matériau que celui du semelage. Même si le confort de la tige s'en trouve dégradé, cela permet de recycler la chaussure entièrement et de proposer une solution de réparation pour les parties 25, (26 + 3) séparables. Le recyclage est ainsi beaucoup plus facile car on peut traiter l'ensemble de la chaussure en une seule fois. L'avantage de cette construction réside surtout dans l'aspect réparation. En agissant sur le moyen de liaison dégradable, on peut séparer le semelage de l'élément couvrant pour remplacer le composant endommagé. Dans ce cas, la partie haute 25 de la tige peut être réalisée avec un des matériaux parmi : un thermoplastique, un élastomère, un matériau naturel. Parmi les matériaux naturels, on peut utiliser un des matériaux suivants : un liège, un cuir, un caoutchouc, un champignon, une algue, une bactérie. On peut également utiliser des matériaux dits « bio-fabriqué », matériau réalisé à partir d'organismes biologiques (mycélium, bactérie...).

Dans les modes de réalisation illustrés dans cette description, toutes les parties de l'élément couvrant sont réalisées avec le même deuxième type de matériau. Cela permet de faciliter le recyclage. Il suffit de traiter ce sous-ensemble en une seule fois. On le broie pour récupérer les broyats réutilisables. Alternativement, l'élément couvrant est construit à partir de composants réalisés dans différents types de matériaux. Dans ce cas, avantageusement, ces composants de l'élément couvrant sont assemblés avec des moyens de liaison dégradable. Cela permet d'envisager plus facilement le recyclage de ces différents composants.

L'élément couvrant peut être un textile tissé, non tissé ou tricoté, un film, des fils brodés.

L'invention porte sur l'assemblage entre l'élément couvrant 25 et la paroi de liaison 261, celui-ci s'avérant facilement démontable. Pour cela, l'élément couvrant 25 est raccordé à la paroi de liaison 261, par un moyen de liaison dégradable 5 lorsque l'article chaussant est exposé à au moins une onde électromagnétique ou, à une température supérieure à 80°C ou, à une température supérieure à 80°C et à la présence de molécules d'eau ou, à une température supérieure à 80°C, à une pression supérieure à 80 bars et à au moins un solvant. Comme on l'a vu précédemment, la paroi de liaison 261 est portée par un élément du semelage ou une pièce solidaire du semelage. La paroi de liaison 261 est dimensionnée de sorte à positionner le moyen de liaison à distance de la surface supérieure d'accueil 32U du semelage externe, au-dessus de celle-ci. Grâce à cette construction, le désassemblage peut être réalisé simplement, facilement et rapidement pour récupérer les sous-ensembles, semelage 3 et partie basse 26 de la tige, d'un côté, et partie haute 25 de la tige, d'un autre côté.

L'élément couvrant 25 et la paroi de liaison 261 sont assemblés, soit bord à bord, soit par recouvrement. Dans ce dernier cas, une portion inférieure de la face interne de l'élément couvrant peut être en regard d'une portion supérieure de la face externe de paroi de liaison. Alternativement, une portion inférieure de la face externe de l'élément couvrant peut être en regard d'une portion supérieure de la face interne de paroi de liaison.

La solidarisation entre l'élément couvrant 25 et la paroi de liaison 261 est obtenue par un moyen de liaison comprenant au moins un fil ou filament dégradable qui va réagir et se dégrader lorsqu'il sera exposé à au moins une onde électromagnétique ou, à une température supérieure à 80°C ou, à une température supérieure à 80°C et à la présence de molécules d'eau ou, à une température supérieure à 80°C, à une pression supérieure à 80 bars et à au moins un solvant. Selon un mode de réalisation principal, le moyen de liaison correspond à tout type de couture utilisant un fil incorporant un réactif qui va réagir lorsqu'il est exposé comme défini précédemment. Ce peut être, entre autres, une couture zigzag, une couture en jointure, une couture pour assemblage à plat. L'association entre l'élément couvrant 25 et la paroi de liaison 261 peut également être fait par broderie. Alternativement, le moyen de liaison correspond à une partie d'un textile constituant la tige. Dans ce cas, on va utiliser des fils ou filaments spécifiques sur une zone localisée. Ces fils ou filaments intègrent un réactif qui va agir lorsqu'ils sont exposés comme défini précédemment. Ces fils ou filaments peuvent être employés pour réaliser des trames, des chaines, des mailles, une zone de fibres agglomérées...

A titre d'exemples, des fils ou filaments dégradables peuvent être des fils tels que décrits ci-après.

Une première solution consiste à utiliser des fils réagissant lorsqu'ils sont exposés à certaines longueurs d'ondes électromagnétiques comme ceux décrits dans le document EP 2 861 793. Cette solution permet un traitement de masse car les ondes traversent la matière. Il n'est donc pas nécessaire d'avoir de coutures accessibles. Le traitement de désolidarisation est alors simplifié. De plus, cette technologie permet de ne pas dégrader les composants de la chaussure lors du désassemblage. C'est un avantage si l'on souhaite réparer la chaussure en changeant le ou les composants abimés.

Une solution alternative est l'utilisation de fils réagissant lorsqu'ils sont exposés à des ondes infrarouges, des ondes électromagnétiques spécifiques.

Une autre solution consiste à utiliser des fils hydrosolubles. Ces fils peuvent se désagréger lorsqu'ils sont en contact avec de l'eau à haute température, par exemple, entre 60 et 100 °C, de préférence autour de 90°C. La chaussure est ainsi en présence d'eau chaude pendant au moins un quart d'heure, de préférence, au moins 30 minutes. Cette solution est intéressante car elle permet de laver la matière avant le recyclage. Cependant, cette solution peut éventuellement endommager certains composants fragiles lors du désassemblage. Ce peut être un inconvénient pour une opération de réparation. Alternativement, la dégradation des fils pourrait se réaliser en présence de vapeur d'eau à haute température au lieu d'être exposé directement à de l'eau chaude.

Une autre solution consiste à utiliser des fils thermiques. Ces fils peuvent se désagréger lorsqu'ils sont exposés à haute température, par exemple, une température supérieure à 100°C. Il faudra néanmoins faire attention à ce que, lors de la production de la chaussure, aucune étape du procédé ne nécessite d'atteindre de telle température au risque de désassembler les composants. De plus, les hautes températures peuvent abimer certains composants fragiles, par exemple, brûler la matière. Aussi, il est préférable que la température reste en dessous de 130°C pour préserver les éléments de la chaussure.

Lorsque le moyen de liaison est une couture d'assemblage comprenant au moins un fil ou filament dégradable, il n'est pas nécessaire que tous les fils de la couture soient dégradables. Ainsi, par exemple, seul le fil de la canette ou de la bobine peut être dégradable, l'autre fil, respectivement, de la bobine ou de la canette, peut ne pas être dégradable. Cela permet d'utiliser des fils plus résistants pour certaines parties exposées et améliorer la tenue de l'assemblage en condition d'utilisation normale. Avantageusement, le fil dégradable est positionné à l'intérieur de la tige.

Alternativement, on peut envisager d'autres moyens de liaison pour solidariser l'élément couvrant 25 et la paroi de liaison 261. Ces moyens doivent être dégradables lorsque l'article chaussant est exposé à au moins une onde électromagnétique ou, à une température supérieure à 80°C ou, à une température supérieure à 80°C et à la présence de molécules d'eau ou, à une température supérieure à 80°C, à une pression supérieure à 80 bars et à au moins un solvant. On peut, par exemple, utiliser une colle ou un film adhésif.

Selon un mode de réalisation, la désolidarisation de l'élément couvrant 25 d'avec la paroi de liaison 261 est obtenue lorsqu'on expose la chaussure à une température supérieure à 80°C, à une pression supérieure à 80 bars et à au moins un solvant. Ces conditions provoquent la dégradation du moyen de liaison 5 permettant la séparation entre l'élément couvrant et le semelage. On constate une bonne dégradation du moyen de liaison lorsque la chaussure est exposée à une température comprise entre 80 et 130 °C, et à une pression comprise entre 80 et 200 bars. La chaussure doit préférentiellement être exposée à ces 3 conditions pendant au moins un quart d'heure pour que la liaison se dégrade correctement. Le solvant utilisé peut être de l'acétone ou un solvant peu impactant l'environnement.

Pour illustrer l'invention, plusieurs modes de réalisation ont été décrits dans les figures 1 à 17.

Un premier mode de réalisation est décrit à travers les figures 1 à 5.

D'un côté, on assemble la couche d'usure 322 avec la couche intercalaire 321 pour former le semelage externe 32, par exemple, par collage.

D'un autre côté, on va réaliser un ensemble supérieur composé de la tige 2 et la première de montage 31. Dans un premier temps, on construit la partie haute 25 de la tige à partir de la claque 21, des quartiers 23M, 23L et de la languette 21. Les composants de la partie haute 25 sont assemblés entre eux par tout moyen connu, par exemple, par le biais de coutures. Dans un deuxième temps, la partie basse 26 de la tige est assemblée à la partie haute 25 de la tige par l'intermédiaire d'un moyen de liaison dégradable 5. Comme nous l'avons vu, les deux parties 24, 25 de la tige peuvent être jointes bord à bord. Le bord inférieur de la partie haute vient en contact avec le bord supérieur de la partie basse. Pour solidariser les deux parties, on peut alors réaliser une couture de type zigzag avec un fil dégradable. Alternativement, les deux parties 24, 25 de la tige peuvent être assemblées par recouvrement. Selon une première configuration, une surface inférieure interne de la partie haute vient se placer en vis-à-vis d'une surface supérieure externe de la partie basse. Selon une seconde configuration, une surface inférieure externe de la partie haute vient se placer en vis-à-vis d'une surface supérieure interne de la partie basse. Pour solidariser les deux parties, on peut aussi ici réaliser une couture avec un fil dégradable. Dans un troisième temps, on assemble la première de montage 31 à la tige 2, plus particulièrement aux bords inférieurs de la partie basse 26 de la tige. Pour cette étape de solidarisation, on peut alors réaliser une couture 62 qui n'est pas nécessairement dégradable.

Ces deux assemblages sont des étapes indépendantes.

L'étape suivante consiste à assembler l'ensemble supérieur avec le semelage externe. Ces deux sous-ensembles sont assemblés entre eux par tout moyen connu, par exemple, par le biais d'une colle 61.

Pour finaliser la chaussure, on va ajouter les éléments accessoires, à savoir, la première de propreté 4 et/ou les lacets (non représenté).

Selon une variante, la partie basse 26 de la tige 2 ne forme par une pièce continue sur tout le pourtour de la tige. Selon un mode de réalisation, la partie basse 26 est présente uniquement sur une partie avant 265. Selon un mode de réalisation, la partie basse 26 est présente uniquement sur une partie arrière 266. Selon un mode de réalisation, la partie basse 26 est présente uniquement sur une partie arrière 266 et une partie avant 265. L'assemblage entre les parties haute et basse de la tige est analogue à ce qui a été décrit précédemment. Dans tous ces cas, dans les zones de la tige où il n'y a pas de pièce rapportée formant la partie basse 26, la partie haute est alors directement assemblée à un élément du semelage, par exemple, à la première de montage 31.

D'autres modes de réalisation vont être décrits à partir des figures 6 à 15. Ces constructions sont des variations du premier mode de réalisation et présentent beaucoup d'analogies avec celui-ci. Les signes de référence utilisés pour le premier mode de réalisation sont, pour la plupart, reportés dans les illustrations des différents modes de réalisation. Pour les explications, les constructions alternatives sont illustrées uniquement sur la zone centrale 267. Ces constructions peuvent être transposées à d'autres zones de la chaussure, comme par exemple la zone avant 265 ou la zone arrière 266. Pour ces variantes, la partie basse 26 de la tige n'est pas nécessairement une pièce continue sur tout le pourtour de la tige. Les alternatives précédemment décrites sont applicables.

La figure 6 décrit un deuxième mode de réalisation, très proche du premier mode de réalisation. Ici, les parties basse 26 et haute 25 de la tige sont assemblées par recouvrement. La surface inférieure externe de la partie haute vient se placer en vis-à-vis d'une surface supérieure interne de la partie basse. Une première couture dégradable 5 solidarise les deux parties 25, 26 de la tige au niveau du bord supérieur, ou légèrement en dessous, de la partie basse 26 de la tige. Une deuxième couture dégradable 5 solidarise le bord inférieur de la partie haute 25 avec un bord de la première de montage 31 ou avec un bord inférieur de la partie basse 26 de la tige.

La figure 7 décrit un troisième mode de réalisation dans lequel la partie basse 26 de la tige couvre une portion supérieure de la partie haute 25 de la tige. La partie basse 26 comprend alors une portion inférieure 261, correspondant à la paroi de liaison, et une extension supérieure 262, prolongeant la paroi de liaison 261 au-delà du moyen de liaison dégradable 5. Cette extension supérieure 262 de la partie basse 26 de la tige peut être positionnée localement, par exemple, uniquement dans une zone centrale 267. Dans un exemple, l'extrémité libre supérieure de cette extension 262 peut porter des passants pour un moyen de serrage de la chaussure. Cela permet d'améliorer le maintien du pied et sa stabilité. Selon une variante, la tige peut comprendre des extensions 262 asymétriques entre l'extension médiale et l'extension latérale.

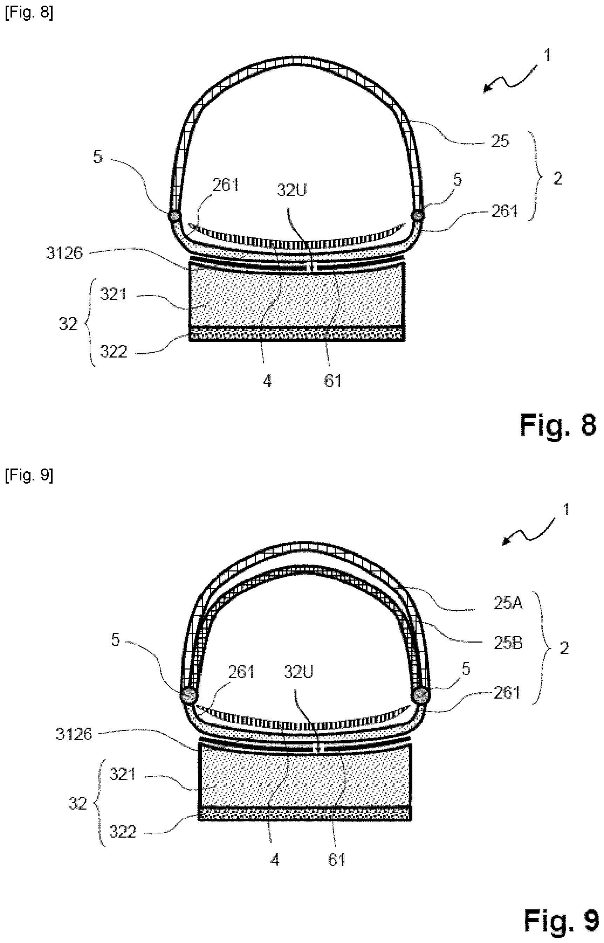

La figure 8 décrit un quatrième mode de réalisation dans lequel la partie basse de la tige et la première de montage forme une pièce monobloc unitaire 3126. Cette pièce monobloc 3126 présente ainsi des parois de liaison latérale et médiale 261 remontant vers le haut de sorte à positionner le moyen de liaison dégradable 5 à distance de la surface supérieure d'accueil du semelage externe, au-dessus de celle-ci.

La figure 9 décrit un cinquième mode de réalisation dérivant du quatrième mode de réalisation de la figure 8. Dans cet exemple, la partie haute 25 de la tige se compose de deux couches 25A, 25B se superposant. Chaque couche 25A, 25B de la partie haute est raccordée aux parois de liaison 261 par un moyen de liaison dégradable 5. Il est envisageable d'utiliser le même moyen de liaison dégradable pour assembler les deux couches 25A, 25B à la paroi de liaison 261.

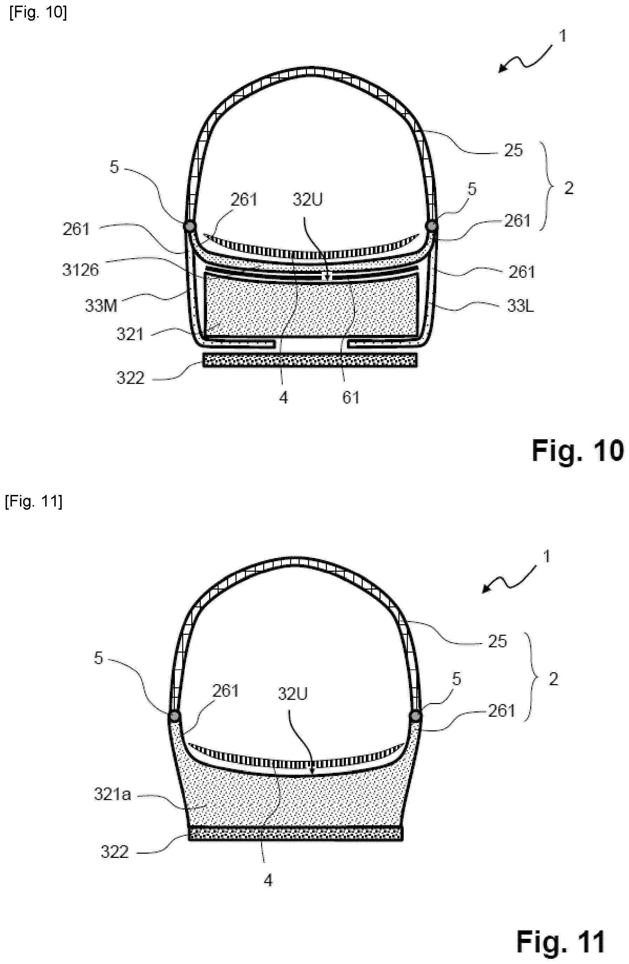

La figure 10 décrit un sixième mode de réalisation dérivant également du quatrième mode de réalisation de la figure 8. Dans cet exemple, la chaussure comprend des panneaux latéral et médial 33L, 33M destinés à couvrir respectivement les bords latéral et médial de la couche intercalaire 321 du semelage. Ces panneaux de renfort 33L, 33M peuvent être positionnés localement, par exemple, uniquement dans une zone centrale 267. Dans cet exemple, le bord inférieur de ces panneaux 33L, 33M vient s'intercaler entre la couche intercalaire 321 et la couche d'usure 322. Les panneaux 33L, 33M peuvent être collés à ces deux couches 321, 322. Le bord supérieur de ces panneaux de renfort 33L, 33M est assemblé à la partie haute 25 de la tige par le biais d'un moyen de liaison dégradable conformément à l'invention. Les panneaux 33L, 33M présentent ainsi des parois de liaison latérale et médiale 261 remontant vers le haut de sorte à positionner le moyen de liaison dégradable 5 à distance de la surface supérieure d'accueil du semelage externe, au-dessus de celle-ci. Dans cet exemple, la pièce monobloc 3126, combinant la partie basse de la tige et la première de montage, est raccordée à la partie haute 25 de la tige au niveau de l'extrémité supérieur des panneaux de renfort 33L, 33M. Il est envisageable d'utiliser le même moyen de liaison dégradable pour assembler la pièce monobloc 3126, la partie haute 25 de la tige et les panneaux de renfort 33L, 33M.

La figure 11 décrit un septième mode de réalisation dans lequel la partie basse de la tige, la première de montage et la couche intercalaire du semelage forment une pièce monobloc unitaire 326. Cette pièce monobloc 326 présente ainsi des parois de liaison latérale et médiale 261 remontant vers le haut de sorte à positionner le moyen de liaison dégradable 5 à distance de la surface supérieure d'accueil du semelage externe, au-dessus de celle-ci.

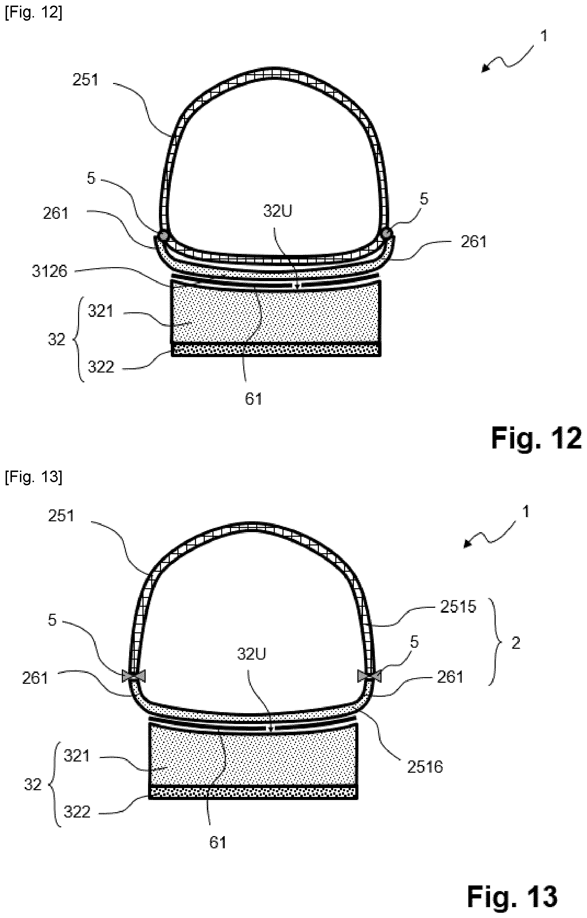

Les figures 12 à 15 illustrent différents modes de réalisation où la tige et une partie de semelage forment un cylindre ou manchon textile destiné à être solidariser au semelage externe 32 ou à un élément solidaire du semelage externe, comme par exemple, une première de montage. Le manchon peut être obturé à une extrémité pour former une chaussette.

La figure 12 décrit un huitième mode de réalisation comprenant un manchon sensiblement circulaire 251 entourant le pied selon un plan coronal ou frontal. L'élément couvre ainsi le pied à 360°. Dans ce mode de réalisation, le manchon 251 forme une pièce monobloc unitaire uniforme. Le manchon est textile. Selon un mode de réalisation, il est réalisé avec le deuxième type de matériau, décrit précédemment. Dans ce mode de réalisation, le manchon est fixé, via des moyens de liaison dégradable 5, sur une pièce monobloc unitaire 3126 telle que décrite à la figure 8, de sorte à positionner le moyen de liaison à distance de la surface supérieure d'accueil du semelage externe, au-dessus de celle-ci.

La figure 13 décrit un neuvième mode de réalisation comprenant un manchon textile 251 composé de deux parties, une partie haute 2515 et une partie basse 2516. Les parties haute et basse sont reliées entre elles par un moyen de liaison dégradable 5, typiquement un fil ou filament dégradable qui va réagir et se dégrader lorsqu'il sera exposé à au moins une onde électromagnétique ou, à une température supérieure à 80°C ou, à une température supérieure à 80°C et à la présence de molécules d'eau ou, à une température supérieure à 80°C, à une pression supérieure à 80 bars et à au moins un solvant. Dans cet exemple, le manchon 251 est directement solidarisé au semelage externe. Le manchon 251 peut être réalisé lors d'une seule opération de fabrication telle que du tricotage, du tissage ou de la broderie. Dans ce cas, le fil dégradable est localement implanté dans le textile afin que, lorsque le manchon est assemblé sur le semelage externe, le moyen de liaison est positionné à distance de la surface supérieure d'accueil du semelage externe, au-dessus de celle-ci. Ici, la paroi de liaison 261 au sens de l'invention correspond donc à une portion de la partie basse 2516 du manchon textile 251.

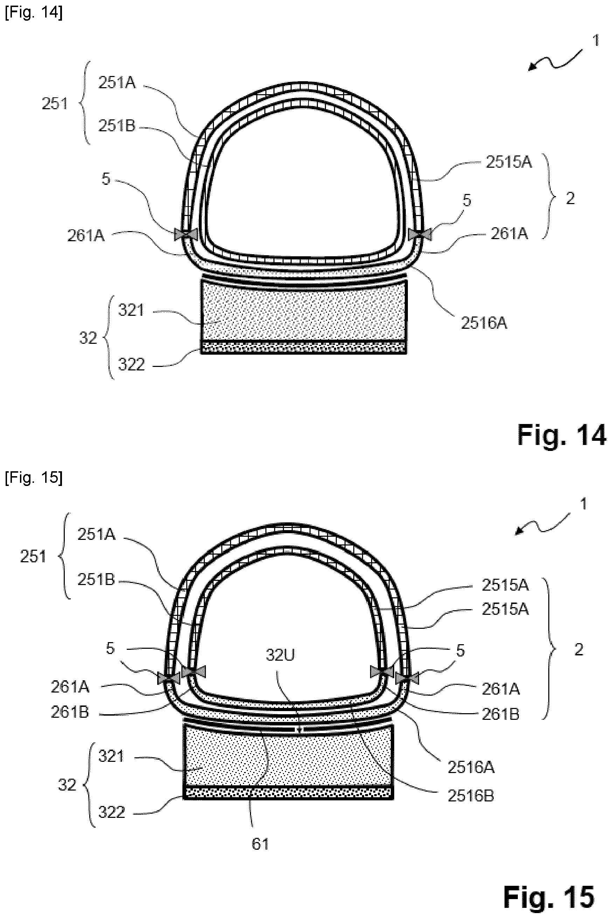

La figure 14 décrit un dixième mode de réalisation comprenant un manchon 251 à double couches. La couche externe 251A est de construction similaire au manchon décrit à la figure 13. La couche externe 251A résulte donc d'un assemblage d'une partie haute 2515A et d'une partie basse 2516A via un moyen de liaison dégradable 5. La couche interne 251B est de construction similaire au manchon décrit à la figure 12. Le manchon double couche 251 peut être fabriqué lors d'une seule opération de fabrication telle que du tricotage ou du tissage. Dans ce cas, la couche externe peut être rabattue sur la couche interne pour former ce manchon double couches. La couche externe 251A externe est solidarisée au semelage externe. Ici, la paroi de liaison 261 au sens de l'invention correspond donc à une partie de la couche externe 251A.

La figure 15 décrit un onzième mode de réalisation dérivant du dixième mode de réalisation de la figure 14. Ici, la couche interne 251B est construite de la même manière que la couche externe 251A et correspond à la construction du manchon décrit à la figure 13. La couche externe 251A résulte d'un assemblage d'une partie haute 2515A et d'une partie basse 2516A via un moyen de liaison dégradable 5. La couche interne 251B résulte d'un assemblage d'une partie haute 2515B et d'une partie basse 2516B via un moyen de liaison dégradable 5. Comme précédemment, le manchon double couche 251 peut être fabriqué lors d'une seule opération de fabrication telle que du tricotage ou du tissage. Dans ce cas, la couche externe peut être rabattue sur la couche interne pour former ce manchon double couches. La couche externe 251A est solidarisée au semelage externe. Ici, la paroi de liaison 261 au sens de l'invention correspond donc à une partie de la couche externe 251A et/ou à une partie de la couche interne 251B.

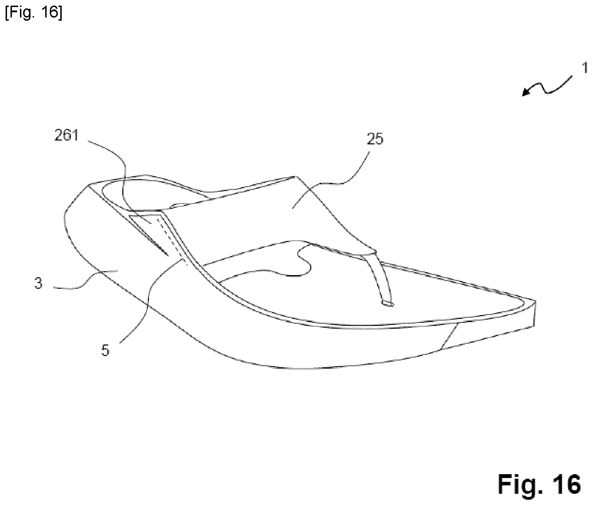

La figure 16 illustre l'application de l'invention à une tong. On retrouve tous les éléments décrits précédemment, à savoir, un semelage 3 comprenant une extension latérale supérieure formant une paroi de liaison 261, un élément couvrant 25 fixé sur la paroi de liaison 261 par un moyen de liaison dégradable 5 de sorte que le moyen de liaison soit positionné à distance de la surface supérieure d'accueil du semelage externe, au-dessus de celle-ci. Dans ce mode de réalisation, l'élément couvrant et la paroi de liaison sont reliés localement, et non sur tout le périmètre du bord supérieur du semelage.

Toutes les constructions décrites précédemment permettent une séparation facilitée entre l'élément couvrant et le semelage en vue d'un recyclage et/ou une réparation.

L'invention n'est pas limitée aux modes de réalisation précédemment décrits. Il est également possible de combiner ces modes de réalisation. L'invention s'étend à tous les modes de réalisation couverts par les revendications annexées.

## Revendications

1. Article chaussant (1) comprenant
• un semelage (3), réalisé essentiellement avec un premier type de matériau, le semelage comprenant
∘ un semelage externe (32) présentant une surface supérieure d'accueil (32U) destinée à faire face à la plante du pied ou,
∘ un semelage externe (32) présentant une surface supérieure d'accueil (32U) destinée à faire face à la plante du pied et une première de montage (31) fixée sur le semelage externe au niveau de la surface supérieure d'accueil, et
• une tige (2) comprenant un élément (25) couvrant au moins une partie du pied, l'élément couvrant étant destiné à être raccordé à un élément (31, 321) solidaire du semelage ou à la première de montage, par un moyen de liaison dégradable (5) lorsque l'article chaussant est exposé, lors d'une opération de recyclage et/ou de réparation,
∘ à au moins une onde électromagnétique ou,
∘ à une température supérieure à 80°C ou, ∘ à une température supérieure à 80°C et à la présence de molécules d'eau ou,
∘ à une température supérieure à 80°C, à une pression supérieure à 80 bars et à au moins un solvant,
la dégradation du moyen de liaison (5) permettant alors la séparation entre l'élément (25) couvrant et le semelage (3) en vue d'un recyclage et/ou une réparation,
où l'élément (31, 321) solidaire du semelage ou la première de montage (31) comprend une paroi de liaison (261) sur laquelle est fixée une partie de l'élément (25) couvrant par l'intermédiaire du moyen de liaison dégradable (5), la paroi de liaison (261) étant dimensionnée de sorte à positionner le moyen de liaison (5) à distance de la surface supérieure d'accueil du semelage externe (32), au-dessus de celle-ci,
où la paroi de liaison (261, 261A, 261B) est une pièce textile réalisée essentiellement avec le premier type de matériau.

2. Article chaussant (1) selon l'une des revendications précédentes, **caractérisé en ce que** la paroi de liaison constitue au moins une partie de la partie frontale (2F) de la tige (2) sur une hauteur (H265) d'au moins dix millimètres, distance verticale mesurée à partir de de la surface supérieure d'accueil (32U) du semelage externe.

3. Article chaussant (1) selon l'une des revendications précédentes, **caractérisé en ce que** la paroi de liaison couvre au moins une portion avant (265) de la tige incorporant une zone frontale, une zone latérale avant et une zone médiale avant de la tige.

4. Article chaussant (1) selon l'une des revendications précédentes, **caractérisé en ce que** la paroi de liaison couvrant la portion arrière (266) présente une hauteur (H266) d'au moins quinze millimètres, distance verticale mesurée à partir de la surface supérieure d'accueil (32U) du semelage externe (32), au niveau d'une extrémité arrière (2R) de la tige.

5. Article chaussant (1) selon l'une des revendications précédentes, **caractérisé en ce que** la paroi de liaison couvre au moins une portion arrière (266) de la tige incorporant une zone arrière, une zone latérale arrière et une zone médiale arrière de la tige.

6. Article chaussant (1) selon l'une des revendications précédentes, **caractérisé en ce que** la paroi de liaison forme une bande continue s'étendant sur tout le périmètre du bord supérieur du semelage.

7. Article chaussant (1) selon l'une des revendications précédentes, **caractérisé en ce que** le moyen de liaison (5) comprend au moins un fil ou filament apte à réagir et à se dégrader lorsqu'il est exposé à au moins une onde électromagnétique ou, à une température supérieure à 80°C ou, à une température supérieure à 80°C et à la présence de molécules d'eau ou, à une température supérieure à 80°C, à une pression supérieure à 80 bars et à au moins un solvant.

8. Article chaussant (1) selon l'une des revendications précédentes, **caractérisé en ce que** le premier type de matériau est un des matériaux parmi : un thermoplastique, un élastomère, un Ethylene-Vinyl Acetate (EVA), un matériau naturel.

9. Article chaussant (1) selon l'une des revendications précédentes, **caractérisé en ce que** l'élément (25) couvrant est réalisé dans un deuxième type de matériau, différent du premier type de matériau.

10. Article chaussant (1) selon la revendication précédente, **caractérisé en ce que** le deuxième type de matériau est un des matériaux parmi : un PolyEster (PES, PET), un PolyAmide (PA), un matériau naturel.

11. Article chaussant (1) selon l'une des revendications précédentes, **caractérisé en ce que** la paroi de liaison (261, 261A, 261B) et l'élément couvrant (2515, 2515A, 2515B) forme un manchon textile (251).

12. Article chaussant (1) selon la revendication précédente, **caractérisé en ce que** le manchon textile est réalisé lors d'une seule opération de fabrication telle que du tricotage, du tissage ou de la broderie, le moyen de liaison étant alors réalisé par un fil dégradable localement implanté dans le textile.

13. Procédé de recyclage et/ou de réparation d'un article chaussant défini selon l'une des revendications précédentes, comprenant une étape consistant à exposer l'article chaussant
• à au moins une onde électromagnétique ou,
• à une température supérieure à 80°C ou,
• à une température supérieure à 80°C et à la présence de molécules d'eau ou,
• à une température supérieure à 80°C, à une pression supérieure à 80 bars et à au moins un solvant.

## Patentansprüche

1. Schuhartikel (1), umfassend
• eine Sohle (3), die im Wesentlichen mit einem ersten Materialtyp hergestellt ist, wobei die Sohle umfasst
∘ eine Außensohle (32), die eine obere Aufnahmefläche (32U) aufweist, die dazu bestimmt ist, gegenüber der Fußsohle zu liegen, oder
∘ eine Außensohle (32), die eine obere Aufnahmefläche (32U) aufweist, die dazu bestimmt ist, gegenüber der Fußsohle zu liegen, und eine Brandsohle (31), die auf der Außensohle an der oberen Aufnahmefläche befestigt ist, und
• einen Schaft (2), der ein mindestens einen Teil des Fußes bedeckendes Element (25) umfasst, wobei das bedeckende Element dazu bestimmt ist, mit einem mit der Sohle fest verbundenen Element (31, 321) oder mit der Brandsohle durch ein Verbindungsmittel (5) verbunden zu werden, das abbaubar ist, wenn der Schuhartikel, bei einem Recycling- und/oder Reparaturvorgang, ausgesetzt wird
∘ mindestens einer elektromagnetischen Welle oder
∘ einer Temperatur über 80 °C oder
∘ einer Temperatur über 80 °C und dem Vorhandensein von Wassermolekülen oder
∘ einer Temperatur über 80 °C, einem Druck über 80 bar und mindestens einem Lösungsmittel,
wobei der Abbau des Verbindungsmittels (5) dann die Trennung zwischen dem bedeckenden Element (25) und der Sohle (3) im Hinblick auf ein Recycling und/oder eine Reparatur ermöglicht,
wobei das mit der Sohle fest verbundene Element (31, 321) oder die Brandsohle (31) eine Verbindungswand (261) umfasst, an der ein Teil des bedeckenden Elements (25) über das abbaubare Verbindungsmittel (5) befestigt ist, wobei die Verbindungswand (261) so dimensioniert ist, dass das Verbindungsmittel (5) im Abstand von der oberen Aufnahmefläche der Außensohle (32), oberhalb von dieser, positioniert ist,
wobei die Verbindungswand (261, 261A, 261B) ein textiles Teil ist, das im Wesentlichen mit dem ersten Materialtyp hergestellt ist.

2. Schuhartikel (1) nach dem vorhergehenden Ansprüche, **dadurch gekennzeichnet, dass** die Verbindungswand mindestens einen Teil des frontalen Teils (2F) des Schafts (2) über eine Höhe (H265) von mindestens zehn Millimetern, dem ausgehend von der oberen Aufnahmefläche (32U) der Außensohle gemessenen vertikalen Abstand, bildet.

3. Schuhartikel (1) nach einem der vorhergehenden Ansprüche, **dadurch gekennzeichnet, dass** die Verbindungswand mindestens einen vorderen Abschnitt (265) des Schafts bedeckt, der einen frontalen Bereich, einen vorderen seitlichen Bereich und einen vorderen mittleren Bereich des Schafts beinhaltet.

4. Schuhartikel (1) nach einem der vorhergehenden Ansprüche, **dadurch gekennzeichnet, dass** die den hinteren Abschnitt (266) bedeckende Verbindungswand eine Höhe (H266) von mindestens fünfzehn Millimetern, dem ausgehend von der oberen Aufnahmefläche (32U) der Außensohle (32) gemessenen vertikalen Abstand, an einem hinteren Ende (2R) des Schafts aufweist.

5. Schuhartikel (1) nach einem der vorhergehenden Ansprüche, **dadurch gekennzeichnet, dass** die Verbindungswand mindestens einen hinteren Abschnitt (266) des Schafts bedeckt, der einen hinteren Bereich, einen hinteren seitlichen Bereich und einen hinteren mittleren Bereich des Schafts beinhaltet.

6. Schuhartikel (1) nach einem der vorhergehenden Ansprüche, **dadurch gekennzeichnet, dass** die Verbindungswand einen kontinuierlichen Streifen bildet, der sich über den gesamten Umfang des oberen Rands der Sohle erstreckt.

7. Schuhartikel (1) nach einem der vorhergehenden Ansprüche, **dadurch gekennzeichnet, dass** das Verbindungsmittel (5) mindestens einen Faden oder ein Filament umfasst, der bzw. das geeignet ist zu reagieren und sich abzubauen, wenn er bzw. es mindestens einer elektromagnetischen Welle oder einer Temperatur über 80 °C oder einer Temperatur über 80 °C und dem Vorhandensein von Wassermolekülen oder einer Temperatur über 80 °C, einem Druck über 80 bar und mindestens einem Lösungsmittel ausgesetzt ist.

8. Schuhartikel (1) nach einem der vorhergehenden Ansprüche, **dadurch gekennzeichnet, dass** der erste Materialtyp eines der Materialien ist unter: einem Thermoplast, einem Elastomer, einem Ethylen-Vinylacetat (EVA), einem natürlichen Material.

9. Schuhartikel (1) nach einem der vorhergehenden Ansprüche, **dadurch gekennzeichnet, dass** das bedeckende Element (25) aus einem zweiten Materialtyp hergestellt ist, der verschieden von dem ersten Materialtyp ist.

10. Schuhartikel (1) nach dem vorhergehenden Anspruch, **dadurch gekennzeichnet, dass** der zweite Materialtyp eines der Materialien ist unter: einem Polyester (PES, PET), einem Polyamid (PA), einem natürlichen Material.

11. Schuhartikel (1) nach einem der vorhergehenden Ansprüche, **dadurch gekennzeichnet, dass** die Verbindungswand (261, 261A, 261B) und das bedeckende Element (2515, 2515A, 2515B) eine textile Hülle (251) bilden.

12. Schuhartikel (1) nach dem vorhergehenden Anspruch, **dadurch gekennzeichnet, dass** die textile Hülle bei einem einzigen Fertigungsvorgang wie dem Stricken, Weben oder Sticken hergestellt wird, wobei das Verbindungsmittel dabei durch einen abbaubaren Faden hergestellt wird, der lokal in das Textil eingeführt wird.

13. Verfahren zum Recycling und/oder zur Reparatur eines nach einem der vorhergehenden Ansprüche definierten Schuhartikels, umfassend einen Schritt, der darin besteht, den Schuhartikel auszusetzen
• mindestens einer elektromagnetischen Welle oder
• einer Temperatur über 80 °C oder
• einer Temperatur über 80 °C und dem Vorhandensein von Wassermolekülen oder
• einer Temperatur über 80 °C, einem Druck über 80 bar und mindestens einem Lösungsmittel.

## Claims

1. Article of footwear (1) comprising
• a bottom assembly (3) made essentially using a first type of material, the bottom assembly comprising
∘ an outsole (32) having an upper receiving surface (32U) intended to face toward the sole of the foot, or
∘ an outsole (32) having an upper receiving surface (32U) intended to face towards the sole of the foot and an insole (31) fixed to the outsole at the upper receiving surface, and
• an upper (2) comprising a covering element (25) covering at least part of the foot, the covering element being intended to be connected to an element (31, 321) secured to the bottom assembly or to the insole by a degradable connecting means (5) that can be degraded when, during a recycling and/or repair operation, the article of footwear is exposed to:
∘ at least an electromagnetic wave, or
∘ a temperature higher than 80°C or
∘ a temperature higher than 80°C and the presence of water molecules, or
∘ a temperature higher than 80°C, a pressure higher than 80 bar and at least one solvent,
the degradation of the connecting means (5) then allowing the covering element (25) to be separated from the bottom assembly (3) for the purposes of recycling and/or repair, wherein the element (31, 321) secured to the bottom assembly or to the insole (31) comprises a connecting wall (261) to which part of the covering element (25) is fixed by means of the degradable connecting means (5), the connecting wall (261) being dimensioned in such a way as to position the connecting means (5) some distance away from the upper receiving surface of the outsole (32), above said surface,
wherein the connecting wall (261, 261A, 261B) is a textile component made essentially using the first type of material.

2. Article of footwear (1) according to the preceding claim, **characterized in that** the connecting wall constitutes at least part of the frontal part (2F) of the upper (2) over a height (H265) of at least ten millimetres, this being a vertical distance measured from the upper receiving surface (32U) of the outsole.

3. Article of footwear (1) according to one of the preceding claims, **characterized in that** the connecting wall covers at least a front portion (265) of the upper incorporating a frontal zone, a front lateral zone and a front medial zone of the upper.

4. Article of footwear (1) according to one of the preceding claims, **characterized in that** the connecting wall covering the rear portion (266) has a height (H266) of at least fifteen millimetres, this being a vertical distance measured from the upper receiving surface (32U) of the outsole (32), at a rear end (2R) of the upper.

5. Article of footwear (1) according to one of the preceding claims, **characterized in that** the connecting wall covers at least a rear portion (266) of the upper incorporating a rear zone, a rear lateral zone and a rear medial zone of the upper.

6. Article of footwear (1) according to one of the preceding claims, **characterized in that** the connecting wall forms a continuous band extending around the entire perimeter of the upper edge of the bottom assembly.

7. Article of footwear (1) according to one of the preceding claims, **characterized in that** the connecting means (5) comprises at least one thread or filament able to react and to degrade when exposed to at least an electromagnetic wave, or to a temperature higher than 80°C, or to a temperature higher than 80°C and to the presence of water molecules, or to a temperature higher than 80°C at a pressure higher than 80 bar and to at least one solvent.

8. Article of footwear (1) according to one of the preceding claims, **characterized in that** the first type of material is one of the following materials: a thermoplastic, an elastomer, an ethylene-vinyl acetate (EVA), a natural material.

9. Article of footwear (1) according to one of the preceding claims, **characterized in that** the covering element (25) is made from a second type of material different from the first type of material.

10. Article of footwear (1) according to the preceding claim, **characterized in that** the second type of material is one of the following materials: a polyester (PES, PET), a polyamide (PA), a natural material.

11. Article of footwear (1) according to one of the preceding claims, **characterized in that** the connecting wall (261, 261A, 261B) and the covering element (2515, 2515A, 2515B) forms a textile sleeve (251).

12. Article of footwear (1) according to the preceding claim, **characterized in that** the textile sleeve is produced in a single manufacturing operation such as knitting, weaving or embroidery, the connecting means then being produced as a degradable thread implanted locally in the textile.

13. Method for recycling and/or repairing an article of footwear defined according to one of the preceding claims, comprising a step consisting in exposing the article of footwear to
• at least one electromagnetic wave, or
• a temperature higher than 80°C or
• a temperature higher than 80°C and the presence of water molecules, or
• a temperature higher than 80°C, a pressure higher than 80 bar and at least one solvent.
